(19)

**Europäisches Patentamt**

**European Patent Office**

**Office européen des brevets**

(11)  **EP 4 718 751 A1**

(12)  # EUROPEAN PATENT APPLICATION

(43) Date of publication:
**01.04.2026   Bulletin 2026/14**

(21) Application number: **24203519.4**

(22) Date of filing: **30.09.2024**

(51) International Patent Classification (IPC):
*H04J 3/06* (2006.01)

(52) Cooperative Patent Classification (CPC):
**H04J 3/0667;** G06N 10/00; H04W 56/001

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
- **Deutsche Telekom AG**
  **53113 Bonn (DE)**
- **Technische Universität Dresden Körperschaft
  des
  öffentlichen Rechts
  01069 Dresden (DE)**
- **CampusGenius GmbH
  01099 Dresden (DE)**

(72) Inventors:
- **YIN, Ming**
  **16341 Panketal (DE)**
- **KIM, Ju Hoon**
  **14947 Nuthe-Urstromtal (DE)**

- **GEITZ, Marc**
  **58089 Hagen (DE)**
- **NANDE, Swaraj Shekhar**
  **01187 Dresden (DE)**
- **BASSOLI, Riccardo**
  **01067 Dresden (DE)**
- **FITZEK, Frank H. P.**
  **01187 Dresden (DE)**
- **HÖSCHELE, Thomas**
  **01156 Dresden (DE)**
- **ITTING, Sebastian**
  **01099 Dresden (DE)**
- **SCHOLZ, Ernest**
  **01097 Dresden (DE)**

(74) Representative: **2SPL Patentanwälte PartG mbB
Landaubogen 3
81373 München (DE)**

Remarks:
Amended claims in accordance with Rule 137(2)
EPC.

(54)  **CLOCK PROVISION SYSTEM, SYSTEM, USE, BASE STATION, CELLULAR NETWORK, AND METHODS**

(57)  Provided is a clock provision system. The clock provision system comprises an interface for coupling to a cellular network and a plurality of locally distributed nodes configured to measure reception times of entangled particles using local clocks of the plurality of distributed nodes. The clock provision system is configured to determine a time correlation of the entangled particles based on the measured reception times. The clock provision system is further configured to synchronize the local clocks of the plurality of nodes based on the determined time correlation. The clock provision system is further configured to control the interface to output at least one clock signal to the cellular network, the at least one clock signal being generated using at least one of the synchronized local clocks.

100

Fig. 1

EP 4 718 751 A1

## Description

### Field

The present disclosure generally relates to clock synchronization, and in particular to a clock provision system, a system comprising a clock provision system, a use of a clock provision system, a base station for a cellular network, a cellular network, a method for determining a position of a user equipment, a method for determining a clock signal for a cellular network, and a method for a base station.

### Background

Network functions of cellular networks may rely on precise synchronization of network components. For example, positioning functions may be more precise, the better the synchronization of base stations are.

In existing positioning technology, a necessary accuracy may not be reached. For example, GPS-based positioning methods (GPS: global positioning system) may not be precise enough to fulfill industrial needs, especially for indoor environments.

Ultra-Wide Band (UWB) technology, on the other hand, may provide high accuracy (10 to 30 cm) in short-range positioning applications. However, its widespread adoption by devices may remain limited due to the short distances that are possible. UWB positioning may be based on transmitting high-frequency signals over short distances. It doesn't require line-of-sight but is may be rather expensive to implement.

Bluetooth-based positioning may achieve an accuracy of up to 3 meters, while Wi-Fi-based positioning may reach an accuracy of 3 to 7 meters. A Wi-Fi-based indoor navigation system may be based on tags to provide coordinate calculation. The coordinate calculation may be carried out based on multilateration, which may use MAC addresses and label signal indicators. Moreover, WiFi RTT (round trip time) may achieve an accuracy of up to 0.9 meters. In Wi-Fi RTT, the coordinate calculation may be based on measuring the distance that separates the labels and the nearest routers.

3GPP Rel-16 introduces uplink time difference of arrival (UL-TDOA) positioning for indoor environments. In sub 7 GHz spectrum (so called FR1), an average positioning accuracy of 2.19 meters may be achieved. UL-TDOA under millimeter wave spectrum (so called FR2) may reach an average positioning accuracy of 0.18 meters. However, sub-centimeter level accuracy may not be achieved with existing techniques.

### Summary

According to a first aspect, the present disclosure relates to a clock provision system. The clock provision system comprises an interface for coupling to a cellular network. The clock provision system further comprises a plurality of locally distributed nodes configured to measure reception times of entangled particles using local clocks of the plurality of distributed nodes. The clock provision system is configured to determine a time correlation of the entangled particles based on the measured reception times. The clock provision system is further configured to synchronize the local clocks of the plurality of nodes based on the determined time correlation. The clock provision system is further configured to control the interface to output at least one clock signal to the cellular network, the at least one clock signal being generated using at least one of the synchronized local clocks.

According to the first aspect, a more exact synchronization between clocks can be achieved. For example, if the clock signal is used in a telecommunications network (as the cellular network), improved network functions that rely on synchronization between base stations may be provided. Moreover, it may not be necessary to change a configuration of existing mobile networks.

In some examples of the first aspect, the clock provision system is further configured to control interface circuitry of the interface at a respective node of the plurality of locally distributed nodes to output the clock signal to a network component of the cellular network that is nearest to the respective node. In such examples, the clock signal is generated by the respective node using its synchronized local clock.

Thereby, a latency or propagation delay may be reduced.

In some examples of the first aspect, the plurality of locally distributed nodes is three locally distributed nodes. In such examples, a first pair of nodes of the three nodes measures reception times of a first entangled particle pair, a second pair of nodes of the three nodes measures reception times of a second entangled particle pair, and a third pair of nodes of the three nodes measures reception times of a third entangled particle pair. In such examples, the clock provision system is further configured to determine a first time correlation of the first entangled particle pair, a second time correlation of the second entangled particle pair, and a third time correlation of the third entangled particle pair. In such examples, the clock provision system is further configured to synchronize the local clocks of the three nodes based on the first, second, and third time correlation.

Thereby, the synchronization between the clocks may be further improved and a better accuracy may be provided.

In some examples of the first aspect, the clock provision system is further configured to control the interface to output respective clock signals to at least two base stations of the cellular network, the respective clock signals being generated using at least one of the synchronized local clocks.

Thereby, the synchronization between the base stations may be improved and network functions that rely on synchronization may be enhanced.

In some examples of the first aspect, a synchronization error resulting from the respective clock signals for the respective cellular networks is less than 100 picoseconds.

Thereby, network functions may be further improved.

In some examples of the first aspect, the interface is further configured to receive a clock signal request from a network component of the cellular network. In such examples, the clock provision system is further configured to control the interface to output the at least one clock signal to the network component in response to the clock signal request.

Thereby, the clock signal can be provided whenever it is needed by the network component such that unnecessary signal transmission is avoided and power is saved.

In some examples of the first aspect, the clock provision system is further configured to control the interface to output the at least one clock signal according to a predetermined scheme.

Thereby, it can be ensured that synchronization in the network is maintained.

In some examples of the first aspect, the plurality of locally distributed nodes is further configured to measure a particle characteristic of the entangled particles. In such examples, the system is further configured to determine the time correlation of the entangled particles based on the measured reception times and based on the measured particle characteristic.

Thereby, a value of the particle characteristic may be taken into account for determining the correlation.

In some examples of the first aspect, the entangled particles are entangled photons.

Thereby, optical instruments/components may be used, such that a measurement accuracy may be improved.

According to a second aspect, the present disclosure relates to a system comprising a clock provision system according to the first aspect or to any example relating to the first aspect. The system further comprises a network component of the cellular network coupled to the interface. The network component is configured to receive a clock signal from the clock provision system, and use the clock signal to provide a network function.

Thereby, similar effects and advantages may be obtained as in the first aspect.

In some examples of the second aspect, the network component is a base station. In such examples, the base station is further configured to use the clock signal to determine an arrival time of an uplink signal of a User Equipment, UE, at the base station. In such examples, the base station is further configured to provide the determined arrival time to a function of the cellular network for determining a position of the UE.

Thereby, localization functions (such as UL-TDOA) may be improved.

In some examples of the second aspect, the system comprises at least two further base station. In such examples, each of the at least two further base stations is configured to receive a respective clock signal from the clock provision system. In such examples, each of the at least two further base stations is further configured to use the respective clock signal to determine an arrival time of the uplink signal at the respective base station. In such examples, each of the at least two further base stations is further configured to provide the determined arrival time to the function of the cellular network for determining the position of the UE.

Thereby, localization functions may be improved.

In some examples of the second aspect, the network function is configured to determine the position of the UE based on time differences between the determined arrival times.

Thereby, the determination of the position may be improved since the synchronization error is minimized.

In some examples of the second aspect, the uplink signal is a sounding reference signal.

Thereby, an existing signal may be used to apply the principles of the present disclosure.

In some examples of the second aspect, a synchronization error resulting from the respective clock signals for the base stations is less than 100 picoseconds.

Thereby, network functions may be improved similar as in the first aspect.

In some examples of the second aspect, the network component is a base station and further configured to use the clock signal for hosting a network slice of the cellular network.

Thereby, network slicing may be improved due to an improved synchronization.

In some examples of the second aspect, the network component is a base station and further configured to use the clock signal for handover of a UE to another base station.

Thereby, handover may be improved due to an improved synchronization between the two base station.

According to a third aspect, the present disclosure relates to a use of a clock signal output by the clock provision system according to the first aspect to provide a network function in a cellular network.

Thereby, similar effects and advantages may be achieved as in the first and the second aspect.

In some examples of the third aspect, the network function includes at least one of determining a time difference of arrival, providing network slicing, and providing a handover.

Thereby, improved network functions may be provided.

According to a fourth aspect, the present disclosure relates to a base station for a cellular network. The base station comprises a node for quantum time synchronization (QTS) configured to exchange, with one or more further nodes for QTS external to the base station, data indicating measured reception times of entangled particles measured at the node for QTS, and at the one or more further nodes for QTS. The node for QTS is further configured to adjust a local clock of the node for QTS based on the measured reception times for synchronizing the local clock of the node for QTS with local clocks of the one or more further nodes for QTS. The base station is configured to use a clock signal of the synchronized local clock of the node for QTS for providing a network function.

Thereby, a base station may be provided which can itself synchronize its local clock. Moreover, it may not be necessary to change a configuration of existing mobile networks (apart from the node for QTS).

In some examples of the fourth aspect, the network function is determining a position of a UE. In such examples, the base station is further configured to use the clock signal to determine an arrival time of an uplink signal of the UE at the base station, and provide the determined arrival time to a function of the cellular network for determining the position of the UE.

Thereby, improved positioning of the UE may be provided.

In some examples of the fourth aspect, the uplink signal is a sounding reference signal.

Thereby, an existing signal may be used to apply the principles of the present disclosure.

In some examples of the fourth aspect, the network function is network slicing, and the base station is further configured to use the clock signal for hosting a network slice of the cellular network.

Thereby, similar effects and advantages may be achieved as discussed above.

In some examples of the fourth aspect, the network function is a handover to a further base station. In such examples, the base station is further configured to use the clock signal for the handover of a UE to the further base station.

Thereby, similar effects and advantages may be achieved as discussed above.

In some examples of the fourth aspect, the node for QTS is further configured to measure the reception time of at least one of the entangled particles.

Thereby, the node for QTS may be able to communicate with other nodes for QTS for synchronizing the base station's clock.

In some examples of the fourth aspect, the node for QTS is further configured to measure a particle characteristic of at least one of the entangled particles.

Thereby, a value of the particle characteristic may be taken into account for determining the correlation.

In some examples of the fourth aspect, the node for QTS is further configured to exchange, with the one or more further nodes, data indicating measured particle characteristics of the entangled particles, and adjust the local clock of the node for QTS based on the measured reception times and the measured particle characteristics.

Thereby, similar effects and advantages may be achieved as discussed above.

According to a fifth aspect, the present disclosure relates to cellular network comprising at least one base station according to the fourth aspect.

Thereby, similar effects and advantages may be achieved as discussed above.

In some examples of the fifth aspect, the cellular network comprises three base stations to determine a position of a UE according to an example of the fourth aspect. In such examples the function of the cellular network is configured to determine the position of the UE based on time differences between the measured arrival times.

Thereby, improved positioning of the UE may be achieved.

In some examples of the fifth aspect, the cellular network comprises two base stations to provide a handover according to the fourth aspect. In such examples, the two base stations are configured to use the clock signals of their synchronized local clocks for handover of the UE from one base station of the two base stations to the other.

Thereby, improved handover may be achieved.

According to a sixth aspect, the present disclosure relates to a method for determining a position of a UE. The method comprises providing a plurality of base stations with a respective quantum time synchronized clock signal. The method further comprises determining, using the respective quantum time synchronized clock signal, arrival times of an uplink signal of the UE at the plurality of base stations. The method further comprises determining the position of the UE based on time differences between the arrival times of the uplink signal.

Thereby, similar effects and advantages may be achieved as in the first to fifth aspect.

In some examples of the sixth aspect, a synchronization error resulting from the quantum synchronized clock signals for the base stations is less than 100 picoseconds.

Thereby, network functions may be further improved.

In some examples of the sixth aspect, the determination of the position has an error of less than 100 millimeters.

Thereby, positioning accuracy may be further improved.

In some examples of the sixth aspect, the plurality of base stations is three base station, and the position of the UE is determined based on a trilateration.

Thereby positioning accuracy may be further improved.

In some examples of the sixth aspect, the uplink signal is a sounding reference signal.

Thereby, an existing signal may be used for determining the UE's position.

According to a seventh aspect, the present disclosure relates to a method for determining a clock signal for a cellular network. The method comprises measuring reception times of entangled particles using local clocks of a plurality of distributed nodes. The method further comprises determining a time correlation of the entangled particles based on the measured reception times. The method further comprises synchronizing the local clocks of the plurality of nodes based on the determined time correlation. The method further comprises outputting a clock signal to the cellular network, the clock signal being generated using at least one of the synchronized local clocks.

Thereby, similar effects and advantages may be achieved as in the first to sixth aspect.

In some examples of the seventh aspect, the method further comprises using, by a network component of the cellular network, the clock signal to provide a network function.

Thereby, an improved network function may be provided.

According to an eighth aspect, the present disclosure relates to a method for a base station. The base station comprises a node for QTS. The method comprises exchanging, with one or more further nodes for QTS external to the base station, data indicating measured reception times of entangled particles measured at the node for QTS and at the one or more further nodes for QTS. The method further comprises adjusting a local clock of the node for QTS based on the measured reception times for synchronizing the local clock of the node for QTS with local clocks of the one or more further nodes for QTS. The method further comprises using a clock signal of the synchronized local clock of the node for QTS for providing a network function.

Thereby, similar effects and advantages may be achieved as in the first to seventh aspect. Moreover, an improved network function may be provided.

## Brief description of the Figures

Some examples of apparatuses and/or methods will be described in the following by way of example only, and with reference to the accompanying figures, in which

Fig. 1 depicts an example of a clock provision system according to the present disclosure;

Fig. 2 depicts an example of a system comprising a clock provision system according to the present disclosure;

Fig. 3 another example of a clock provision system according to the present disclosure;

Fig. 4 depicts an example of a base station according to the present disclosure;

Fig. 5 depicts an example of a cellular network according to the present disclosure;

Fig. 6 depicts a flowchart of an exemplary method for determining a position of a UE according to the present disclosure;

Fig. 7 depicts a flowchart of an exemplary method for determining a clock signal according to the present disclosure;

Fig. 8 depicts a flowchart of an exemplary method for a base station according to the present disclosure;

Fig. 9 depicts a sequence diagram of an exemplary method according to the present disclosure;

Fig. 10 depicts a sequence diagram of an exemplary method according to the present disclosure; and

Fig. 11 depicts a sequence diagram of an exemplary method according to the present disclosure for UL-TDOA.

## Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

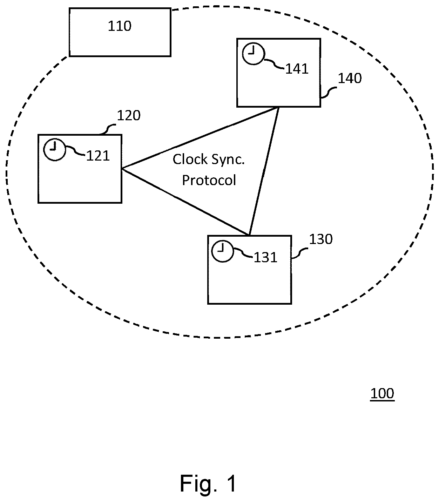

Fig. 1 depicts a clock provision system 100 according to the present disclosure. The clock provision system 100 includes an interface 100 for coupling to a cellular network and a plurality of locally distributed nodes 120, 130, 140.

The interface may be any interface capable of outputting a clock signal to a cellular network based on signal or data obtained from the locally distributed nodes 120, 130, and 140. The interface may depend on the cellular network that is used. For example, the interface 100 may be an X2 interface (e.g., as it is used in LTE (long term evolution) network architecture or any other network architecture), an Abis interface (e.g., as it is used in 2G/GSM network architecture or any other network architecture), an Ater interface (e.g., as it is used in 2G/GSM network architecture or any other network architecture), an Iu interface (e.g., as it is used in 3G/UMTS network architecture or any other network architecture), an Iur interface (e.g., as it is used in 3G/UMTS network architecture or any other network architecture), an NG interface (e.g., as it is used in 5G/NR network architecture or any other network architecture), an Xn interface (e.g., as it is used in 5G/NR network architecture or any other network architecture), an N2 interface (e.g., as it is used in 5G/NR network architecture or any other network architecture), or the like.

The plurality of locally distributed nodes 120, 130, and 140 (which are three nodes in this examples, but the present disclosure is not limited to any specific number of nodes - for example two nodes may be provided or more than three nodes) are configured to measure reception times of entangled particles each using local clocks 121, 131, 141. Accordingly, each of the plurality of locally distributed nodes 120, 130, 140 may have measurement circuitry for measuring reception times of particles and for determining (or detecting) which of the received particles are entangled. The measurement circuitry that is used may depend on a type of particles that are involved and a property (or particle characteristic) that is to be measured (e.g., spin, polarization, momentum, angular momentum, emission angle, or the like). For example, if the entangled particles are photons, single-photon detectors, polarizing beam splitters, wave plates, or the like may be used. On the other hand, if the entangled particles are electrons or ions, CCDs (charge-coupled devices) and spin detectors may be used. Moreover, coincidence counters may be used for detecting and registering simultaneous events from multiple detectors to ensure that coincident detections of the entangled particles are recorded. Coincidence may refer to the detection of events of entangled particles at locally distinct locations (e.g., at two nodes). Also, interferometers or Bell state analyzers may be used (e.g., Mach-Zehnder interferometer, Michelson interferometer, or the like) may be used for detecting phase entanglement or to perform a Bell test. Entanglement may relate to a phenomenon in which a state of one particle is instantaneously correlated with the state of another particle, regardless of the distance between them. Hence, entangled particles may refer to at least two particles whose states are instantaneously correlated with each other, regardless of the distance between them.

The entangled particles may be generated by an entanglement source, e.g., based on spontaneous parametric down conversion (SPDC) which may use a non-linear crystal configured to split a single high-energy photon into two lower-energy entangled photons. However, the present disclosure is not limited in that regard. For example, spontaneous four-wave mixing (SFWM) may be applied additionally or alternatively for generating entangled photon pairs. If SPDC and SFWM are both used, multipartite entanglement may be provided. For generating entangled states of atoms or ions, atomic or ion traps may be used, for example. Also, radioactive decay processes may be used to obtain entangled particles. Hence, entangled particles may include photons, ions, atoms, neutrons, positrons, electrons, neutrinos, their respective anti-particles or the like. Also, different types of particles may be entangled with each other.

It should be noted that, although the present disclosure is written with respect to entangled particles, an entanglement characteristic may rather be associated with a wave characteristics of the particle or the quant. Therefore, the term particle may refer to a quant in general and a particle-wave dualism is considered according to the present disclosure.

The clock provision system 100 is configured to determine a time correlation of the entangled particles based on the measured reception times. As mentioned above, circuitry for determining the time correlation may be present.

Furthermore, processing circuity may be used to process signals and to apply a clock synchronization protocol, such as PTP (precision time protocol), White Rabbit, or the like. The processing circuitry may be a single dedicated processor, a single shared processor, or a plurality of individual processors, some of which or all of which may be shared, a digital signal processor (DSP) hardware, an application specific integrated circuit (ASIC), a neuromorphic processor or a field programmable gate array (FPGA). The processing circuitry may optionally be coupled to, e.g., read only memory (ROM) for storing software, random access memory (RAM) and/or non-volatile memory.

Hence, the clock provision system 100 is further configured to synchronize the local clocks 121, 131, 141 of the plurality of nodes 120, 130, 140 based on the determined time correlation. For example, due to the entanglement of the particles, a point of time at which the particles have been generated may be known, which may serve as a reference point of time. When the entangled particles are detected at the nodes, based on the knowledge when they were generated, the nodes may be able to determine that reference point of time, e.g., taking into account a propagation speed of the particles (e.g., speed of light in an optical fiber), a distance between the entanglement source and the respective nodes, and the like. Thereby, each node detecting respective entangled particles may be configured to determine a reference point of time and the clocks 121, 131, 141 may be synchronized based on a synchronization protocol as discussed above. According to the present disclosure, quantum time synchronization (QTS) may be carried out. Therefore, the nodes 120, 130, and 140 may also be called QTS nodes, in some instances.

The system 100 is further configured, using at least one of the synchronized local clocks 121, 131, 141 to control the interface 110 to output at least one clock signal to the cellular network.

The clock signal may refer to a timing reference signal (e.g., a timestamp) used to synchronize transmission, reception, and processing of data across different network components. The clock signal may oscillate between a high and a low state, creating a regular, predictable pulse that may serve as a timing mechanism to coordinate the flow of digital data. In cellular networks, clock signals may ensure that all elements, such as base stations, network nodes, and mobile devices (as network components) operate in precise synchronization. This synchronization may be crucial for maintaining data integrity, reducing latency, and ensuring seamless handovers between cells, as well as supporting time-sensitive operations like packet transmission, modulation, and coding, without limiting the present disclosure in that regard (also time difference of arrival, network slicing, and the like may be provided based on the clock signal).

In some examples, the system 100 is configured to control interface circuitry of the interface 100 at a respective node of the plurality of locally distributed nodes 120, 130, 140, to output the clock signal to a network component of the cellular network that is nearest to the respective node 120, 130, 140. In such examples, each of the nodes 120, 130, 140 may include the interface circuitry (not depicted) to output the clock signal to a respective network component. Moreover, in such examples, the clock signal is output by the respective node using its synchronized local clock.

"Nearest" may refer to a minimal distance that the clock signal may need to travel in order to arrive from the respective node to the network component. For example, the minimal distance may be established by an amount of cable (e.g., fiber optic cable) that connects the interface circuitry of the respective node with the network component. However, the present disclosure is not limited in that regard as also the minimal direct/linear distance (or geodesic distance) between the node (or the interface circuitry) and the network component may be covered by the term "nearest". For example, if the clock signal is transmitted via an air interface, the nearest distance may refer to such a direct/linear/geodesic distance. Based on using the nearest node, a transmission latency may be minimized.

In some examples, the plurality of distributed nodes is three distributed nodes, as depicted in Fig. 1. In such examples, a first pair of nodes (e.g., 120 and 130) of the three nodes measures reception times of a first entangled particle pair. Moreover, a second pair of nodes (e.g., 120 and 140) of the three nodes measures reception times of a second entangled particle pair. Moreover, a third pair of nodes (e.g., 130 and 140) of the three nodes measures reception times of a third entangled particle pair. In such examples, the system 100 is further configured to determine a first time correlation of the first entangled particle pair, a second time correlation of the second entangled particle pair, and a third time correlation of the third entangled particle pair.

For example, the first particle pair may be generated at a first point of time, the second particle pair may be generated at a second point of time (e.g., after the first point of time), and the third particle pair may be generated at a third point of time (e.g., after the second point of time). In such a case, each pair of nodes may determine an origin/reference point of time for the respective particle pair, as discussed above and the local clocks of each pair of nodes may already be synchronized based on the respective reference point of time. Then, each local clocks of the three nodes are synchronized based on the first, second and third time correlation.

For example, for synchronizing the clocks, each respective node may record an arrival time of respective photons. This measurement may need to be extremely precise, e.g., at least on the order of picoseconds or better. Each location's clock (e.g., atomic, optic, electronic clock, or the like) may record a local time at which the photon detection occurred. The recorded times may be analyzed to calculate the difference between two clocks. The quantum correlations between the entangled photons may be used to adjust the clocks accordingly. This may involve compensating for any delays in the communication channel. Then, clock settings may be adjusted based on the synchronization calculations to ensure that both clocks reflect the same time. For continued accuracy, this process may need to be repeated periodically since environmental factors may introduce drift over time.

For synchronizing three nodes, a consecutive pairwise synchronization may be carried out. For example, first two nodes (e.g., 120 and 130) may be synchronized and one may be set as a master node (e.g., node 120). A local clock offset may be determined between the two nodes, as discussed herein, and adjusted based on the entangled particles. Then a second pair of nodes may be synchronized (e.g., 130 and 140) and the master node may be changed (e.g., to 130). This approach may be carried out continuously. With such an approach, a more precise synchronization than with only two nodes may be achieved.

On the other hand, one node may always remain the master node. For example, node 120 may remain the master node even when synchronizing nodes 130 and 140. In the synchronization of node 130 with node 140, node 130 may be set as a master node for this synchronization, but the overall master node may still be node 120.

In some examples, the system 100 is further configured to control the interface 110 to output respective clock signals to at least two base stations of the cellular network, the respective clock signals being generated using at least one of the synchronized local clocks. For example, only one of the synchronized local clocks is used or for each base station, the synchronized local clock that is nearest to the respective base station is used. As indicated above, base stations may be synchronized for providing a network function. The better the synchronization (i.e., the smaller the synchronization error), the better/smoother the network function may be carried out. A synchronization error may refer to a mismatch or loss of alignment in the timing or frequency reference signals sent by (at least) two base stations.

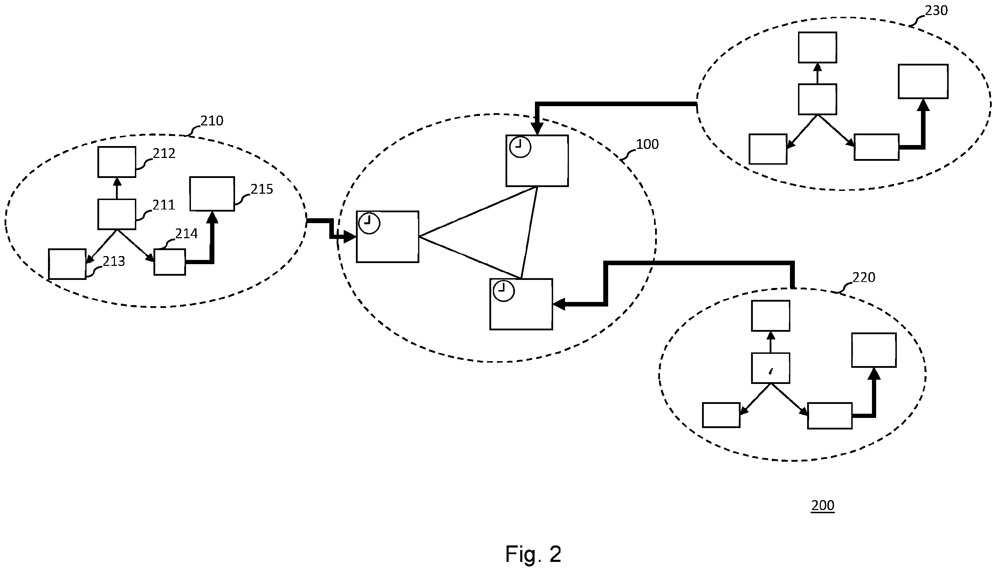

The network function will be discussed under reference of Fig. 2.

In some examples, a synchronization error resulting from the respective clock signals for the respective cellular networks is less than 100 picoseconds. In some examples, the synchronization error is less than 80 picoseconds. In some examples, the synchronization error is less than 1 nanosecond.

In some examples, the interface 100 is further configured to receive a clock signal request from a network component of the cellular network. For example, the network component (e.g., base station, core network, or the like) may be configured to compare its clock with a master clock (i.e., the synchronized local clock of one of the nodes) to maintain synchronization with other network components. In such examples, the network component may be configured to "pull" the clock signal (i.e., send the request) according to its configuration (e.g., periodically). In such examples, the system 100 is further configured to control the interface to output the at least one clock signal to the network component in response to the clock signal request.

In some examples, the system 100 is further configured to control the interface to output the at least one clock signal according to a predetermined scheme. In such examples, the system 100 or the interface 110 is configured to "push" the clock signal to a network component which receives the clock signal to adapt its internal clock and maintain synchronization with other network components. The predetermined scheme may include a periodic outputting of the clock signal to at least one network component or to all network components at once. The scheme may alternatively include a consecutive outputting to each network component that is connected to the interface 110. If each node of the plurality of nodes 120, 130, 140 includes interface circuitry, as discussed above, each node may be configured to apply a predetermined scheme to output the clock signal to the network component(s) with which it is connected.

In some examples, the plurality of locally distributed nodes 120, 130, 140 is further configured to measure a particle characteristic of the entangled particles. As discussed above, the particle characteristic may include at least one of spin, polarization, momentum, angular momentum, emission angle, Bell state, or the like. In such examples, the system 100 is further configured to determine the time correlation of the entangled particles based on the measured reception times and based on the measured particle characteristic.

Fig. 2 depicts a system 200 (or cellular network 200) comprising the clock provision system 100 of Fig. 1, wherein in the example of Fig. 2, each node has interface circuitry for providing the clock signal to the respective nearest network component. The system 200 further comprises cells 210, 220, 230. For simplicity, each cell is established by the same network components, but the present disclosure is not limited in that regard. A cell may refer to an area covered by a single base station's radio signal. Each cell may be served by base stations 212, 213, and 214. In each of the cells 210, 220, 230 a user equipment 211 may be present. Each cell may further include a location management function (LMF) 215 for determining a position of the user equipment 211 in the respective cell. Each cell is provided with a clock signal of a node that is closest to the respective cell.

In the system 200, a network component of the cellular network (the base station 211, in this example) is coupled to the interface of the clock provision system 100 and configured to receive the clock signal from the clock provision system 100 and to use the clock signal to provide a network function, as will be discussed below.

In some examples, the network component is a base station (such as the base station 211). The base station 211 may be configured to use the clock signal to determine an arrival time of an uplink signal of a User Equipment (UE) at the base station. Any part of the uplink signal may be used for determining the arrival time (since a signal may last longer than only one point in time), such as a beginning or an end of the uplink signal, without limiting the present disclosure in that regard. The base station may be further configured to provide the determined arrival time to a function of the cellular network for determining a position of the UE. The function may include a location management function (LMF; e.g., carried out in a core network) which is configured to determine, based on the arrival time, the position. For example, the network function may include a positioning of the UE based on a time difference of arrival (TDOA) of the uplink signal at two base stations. In such examples, the uplink signal may be detected by the two base stations and a trilateration may be carried out for determining the position of the UE.

For example, the TDOA may be expressed as

$$\Delta t_j^{A_2 A_1} = \frac{||\vec{x}^{A_2} - \vec{x}_j|| - ||\vec{x}^{A_1} - \vec{x}_j||}{c} + (\tau^{A_2} - \tau^{A_1}) + (\tau_m^{A_2} - \tau_m^{A_1}) + (\Delta\tau_j^{A_2} - \Delta\tau_j^{A_1})$$

The term $\vec{x}^{A_2} - \vec{x}_j$ indicates a distance between a second base station $A_2$ and the UE. The term $\vec{x}^{A_1} - \vec{x}_j$ indicate a distance between a first base station $A_1$ and the UE. Accordingly, the term $\frac{||\vec{x}^{A_2} - \vec{x}_j|| - ||\vec{x}^{A_1} - \vec{x}_j||}{c}$ indicates a theoretical time difference of without any transmission error with c being the speed of light. The additional terms are transmission error terms. The term $(\tau^{A_2} - \tau^{A_1})$ is a clock synchronization error (or clock difference) between the two base stations $A_1$ and $A_2$. The term $(\tau_m^{A_2} - \tau_m^{A_1})$ refers to a multipath error difference between the two base stations $A_1$ and $A_2$. Multipath errors may include extra distance caused by environmental reflections and extra delay in hardware. The multipath error difference may be considered a fixed value. The term $(\Delta\tau_j^{A_2} - \Delta\tau_j^{A_1})$ includes remaining error terms, such as hardware delay and cable delay, which is also considered a fixed value, in some cases. Fixed values may be subtracted from the TDOA without losing much accuracy However, the clock synchronization error is not necessarily fixed. Therefore, by providing a more exact clock, as in the present disclosure, the TDOA error may be minimized and positioning based on TDOA may be made more accurate.

Based on the TDOA, a distance difference may be determined as:

$$\Delta d_j^{A_2 A_1} = c * t_j^{A_2 A_1}$$

This may imply that a locus of points equidistant to distance difference forms a hyperbola with foci at the base stations $A_1$ and $A_2$. Therefore, trilateration may be used for determining the UE's position. Trilateration may require to know positions of at least three base stations to determine the position of the UE based on the distances calculated from the time differences between respective two base stations.

There may be different ways of solving an equation system that for the three base station, i.e., for the three different TDOAs for each base station pair (i.e.: $\Delta t_j^{A_2 A_1}, \Delta t_j^{A_3 A_1}, \Delta t_j^{A_3 A_2}$).

For example, iterative numerical approaches may be used to pinpoint the location of the UE. For example, the Newton-Raphson method may be used which may be capable of modifying position estimates by iterative reduction of residuals (differences between computed and measured TDOAs). This technique may converge on the UE position by gradually modifying the estimated coordinates until the disparities are reduced to acceptable levels (i.e., lie below a predetermined threshold).

On the other hand, due to the hyperbolic form intrinsic to trilateration equations, the Runge-Kutta method may be used for obtaining solutions that satisfy a predefined accuracy threshold. By deploying the Runge-Kutta method to the linearized trilateration equations, one may emulate a gradual refinement process. This method's essence may lie in its intermediate calculations during each iteration, in which the UE's position estimates are incrementally updated using differential time arrivals.

For quantifying an accuracy of the positioning, a Root Mean Square Error (RMSE) may be used. The RMSE may provide insights into the precision and reliability of the location estimation process, helping to identify areas for improvement in UL-TDOA implementations.

By applying such mathematical and computational techniques, advancements in UL-TDOA may enhance the accuracy and reliability of localization services in cellular networks.

By improving the synchronization of the base stations, a positioning accuracy may be improved, as indicated above. For example, und UL-TDOA, which is discussed herein, a one nanosecond clock synchronization error may cause a positioning error of up to 30 centimeters in 5G networks. However, for applications like emergency response, asset tracking, and location-based services, where accuracy may be considered paramount, such a positioning error may not be acceptable. On the other hand, synchronization based on quantum entanglement, as discussed herein, may achieve a femtosecond-level precision, such that a positioning error may be reduced to a centimeter or sub-centimeter level.

The UL-TDOA positioning according to the present disclosure may be used in indoor environments, such as factory/enterprise sites, e.g., for providing precise localization of internet of things (IoT) devices (as UEs, in this example). However, the present disclosure is not limited in that regard since positioning in outdoor environments may also be possible. For example, even over a distance of a hundred kilometers, the clock synchronization error may not be more than 100 picoseconds, such that also in outdoor environments, precise localization of UEs may be possible.

Accordingly, in some examples, the system 200 comprises at least two further base stations. Each of the at least two further base stations may be configured to receive a respective clock signal from the clock provision system use the respective clock signal to determine an arrival time of the uplink signal at the respective base station. The two further base stations may be further configured to provide the determined arrival time to the function of the cellular network for determining the position of the UE.

In some examples, the function is configured to determine the position of the UE based on time differences between the determined arrival times (e.g., based on UL-TDOA).

In some examples, the uplink signal is a sounding reference signal. A Sounding Reference Signal (SRS) may refer to a type of uplink signal transmitted by a mobile device to allow the base station to estimate the channel quality and conditions in a cellular network. It may typically be used beamforming, link adaptation, and scheduling decisions, thereby helping the network to optimize the use of its resources. SRS may provide feedback to the base station, enabling efficient communication and network performance. In some examples, the arrival time of the SRS is determined for determining the TDOA.

In some examples, the network component is a base station and further configured to use the clock signal for hosting a network slice of the cellular network. Network slicing may refer to creating multiple logical networks on a shared physical infrastructure, each tailored to specific applications like IoT, autonomous driving, and enhanced broadband. Precise time synchronization may ensure that all network components operate in unison, allowing for accurate resource allocation and management across different slices. This may minimize latency and maximize efficiency. For example, ultra-reliable low-latency communication (URLLC) slices may achieve sub-millisecond latency through precise time synchronization, enabling real-time data transmission. Additionally, improved synchronization may improve slice isolation, ensuring that high-priority slices maintain performance even under heavy network loads. By reducing timing discrepancies and jitter, accurate time synchronization may enhance the overall performance and quality of service (QoS) in network slicing. Thereby, a harmonic operation of network slicing across geographically distant sites and nodes may be provided.

In some examples, the network component is a base station and further configured to use the clock signal for handover of a UE to another base station. Handover may refer to a process by which an active connection of a mobile device is seamlessly transferred from one cell or base station to another as the device moves through a network. It may ensure continuous connectivity and uninterrupted service, such as calls or data sessions, as the UE moves across different coverage areas. In high-speed environments, such as vehicles in motion, precise timing may be essential for flawless handovers between cell towers. Accurate synchronization between source and target cells may enable better prediction of handover timing, reducing dropped calls and maintaining the quality of ongoing data sessions, thereby enhancing the overall user experience.

Some examples pertain to a use of a clock signal output by the clock provision system according to the present disclosure to provide a network function in a cellular network. In some examples, the network function includes at least one of determining a time difference of arrival, providing network slicing, and providing a handover, as discussed herein.

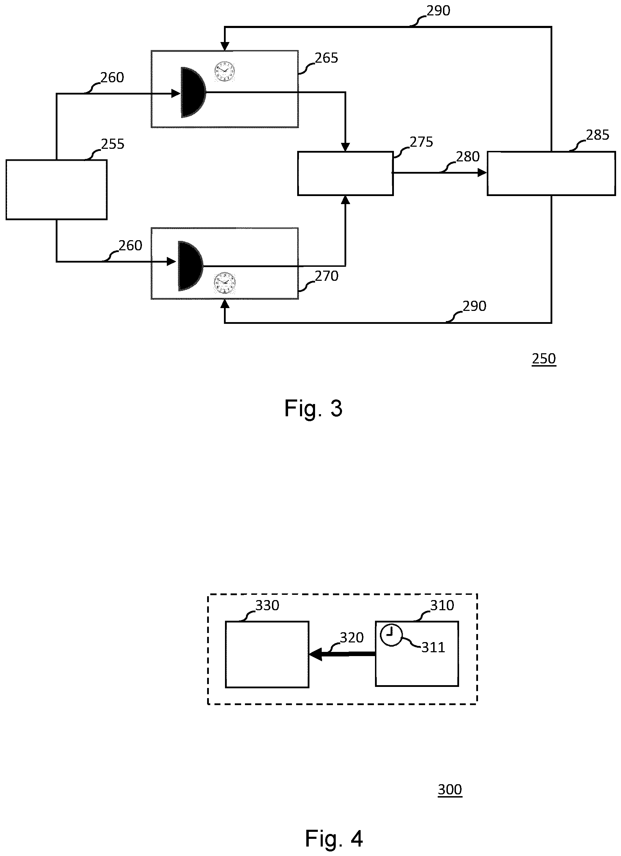

Fig. 3 depicts an example of a clock provision system 250 according to the present disclosure

The clock provision system 250 comprises an entangled photon source 255 configured to generate pair of photons whose quantum states are entangled (or interconnected/correlated). The entangled photon source is further configured to distribute, 260, the entangled photons to two distant locations, i.e., to a first node 265, and a second node 270, each including an internal clock that is to be synchronized (or where the synchronization is to be maintained based on the entangled photons). Each of the nodes 265 and 270 comprises a single photon detector configured to receive the entangled photons and connected to the respective internal clocks.

The single photon detectors are connected to a time tagging system 275 configured to record the (exact) times at which each photon is detected at the respective node, thereby ensuring high precision of logging the detection times.

The time tagging system 275 transmits, 280, time tags indicating at which point in time the respective node 265 or 270 received the respective photon(s), to a time offset measurement function 285. The function 285 is configured to align the clocks of the nodes 265 and 270 based on the detection events and the time tags, thereby synchronizing the clock. The synchronization is carried out based on a feedback loop 290 to adjust the clocks at nodes 265 and 270.

Fig. 4 depicts a base station 300 for a cellular network. The base station 300 comprises a node for QTS 310 configured to exchange, with one or more further nodes for QTS external to the base station, data indicating measured reception times of entangled particles measured at the node for QTS 310 and at the one or more further nodes for QTS. The node for QTS 310 may measure/detect/determine the entangled particles similar as described under reference of Fig. 1,

**EP 4 718 751 A1**

i.e., corresponding optics, detectors, etc. may be provided. The node for QTS 310 is further configured to adjust a local clock 311 of the node for QTS 310 based on the measured reception times for synchronizing the local clock 311 of the node for QTS 310 with local clocks of the one or more further nodes for QTS. The base station 300 is further configured to use a clock signal 320 of the synchronized local clock 311 of the node for QTS 310 for providing a network function.

Hence, in contrast to the examples of Fig. 1 and 2, where the base stations (or other network components) receive a clock signal from external synchronized local clocks, in this example, the base station 300 includes a node for QTS and is capable of synchronizing its local clock based on a communication with other local clocks (e.g., provided in other base stations.

In some examples, the node for QTS 310 is further configured to exchange, with the one or more further nodes, data indicating measured particle characteristics of the entangled particles. For example, the data may indicate a value of the particle characteristic (or entanglement characteristic), such as a spin value, a polarization value, and the like. Based on the data, the node for QTS 310 which particles are entangled and may thereby determine a reference point of time at which the particles were generated, as discussed above.

The node for QTS may be further configured to adjust its local clock 311 based on the measured reception times and the measured particle characteristics. For example, a clock synchronization protocol may be applied, as discussed above.

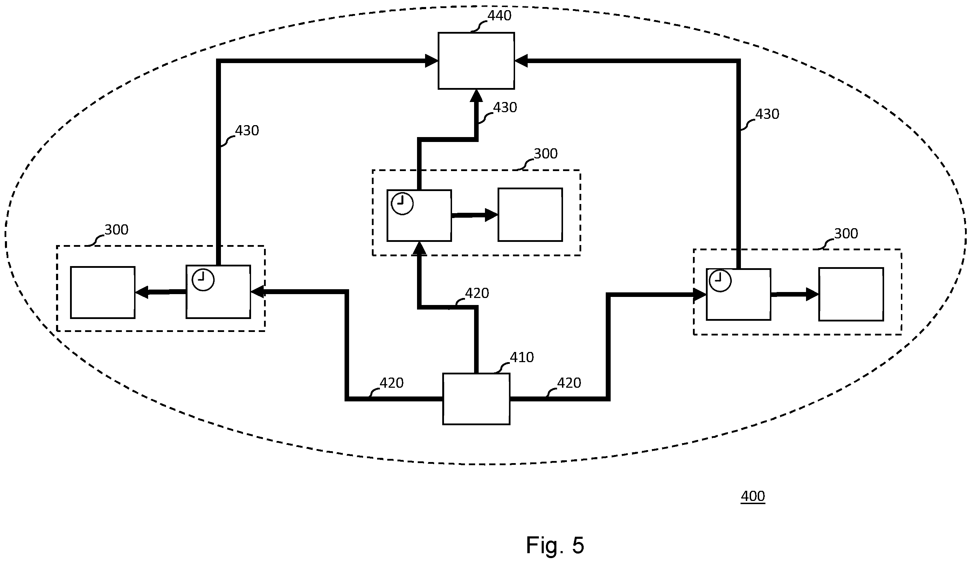

Fig. 5 depicts a cellular network 400 according to the present disclosure comprising a plurality of base stations 300, as discussed under reference of Fig. 3.

In this example, the cellular network 400 comprises three base stations, but the present disclosure is not limited in that regard, since two base stations or more than three base stations may be utilized.

In some examples, the function of the cellular network is configured to determine the position of the UE based on time differences between the measured arrival times. For example, UL-TDOA may be carried out based on the three base stations, as discussed above. For carrying out TDOA, a UE 410 may transmit an SRS 420 which may be received by the three base stations 300. Each of the base stations 300 may transmit a measurement report 430 including the reception times (generated based on the clock signal of the respective synchronized local clocks 311) of the SRS 420 to a location management function (LMF) 440 which may carry out a trilateration algorithm, as discussed above for determining the position of the UE 410.

As indicated above, the cellular network 400 may comprise (at least) two base stations 300 configured to use the clock signals of their synchronized local clocks for handover of the UE from one base station of the two base stations to the other.

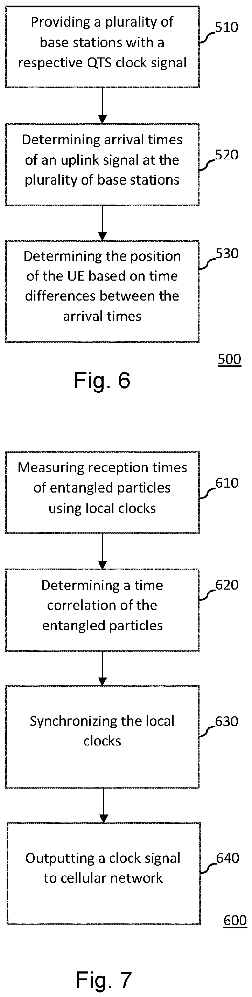

Fig. 6 depicts a flowchart of a method 500 for determining a position of a UE according to the present disclosure. The method 500 comprises providing, 510, a plurality of base stations with a respective quantum time synchronized clock signal. The method 500 further comprises determining, 520, using the respective quantum time synchronized clock signal, arrival times of an uplink signal of the UE at the plurality of base stations. The method 500 further comprises determining, 530, the position of the UE based on time differences between the arrival times of the uplink signal.

Fig. 7 depicts a flowchart of a method 600 for determining a clock signal for a cellular network according to the present disclosure. The method 600 comprises measuring, 610, reception times of entangled particles using local clocks of a plurality of distributed nodes. The method 600 further comprises determining, 620, a time correlation of the entangled particles based on the measured reception times. The method 600 further comprises synchronizing, 630, the local clocks of the plurality of nodes based on the determined time correlation. The method 600 further comprises outputting, 640, a clock signal to the cellular network, the clock signal being generated using at least one of the synchronized local clocks.

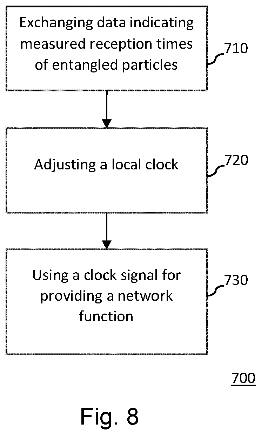

Fig. 8 depicts a flowchart of a method 700 for a base station according to the present disclosure. The base station comprises a node for QTS. The method 700 comprises exchanging, 710, with one or more further nodes for QTS external to the base station, data indicating measured reception times of entangled particles measured at the node for QTS and at the one or more further nodes for QTS. The method 700 further comprises adjusting, 720, a local clock of the node for QTS based on the measured reception times for synchronizing the local clock of the node for QTS with local clocks of the one or more further nodes for QTS. The method 700 further comprises using, 730, a clock signal of the synchronized local clock of the node for QTS for providing a network function.

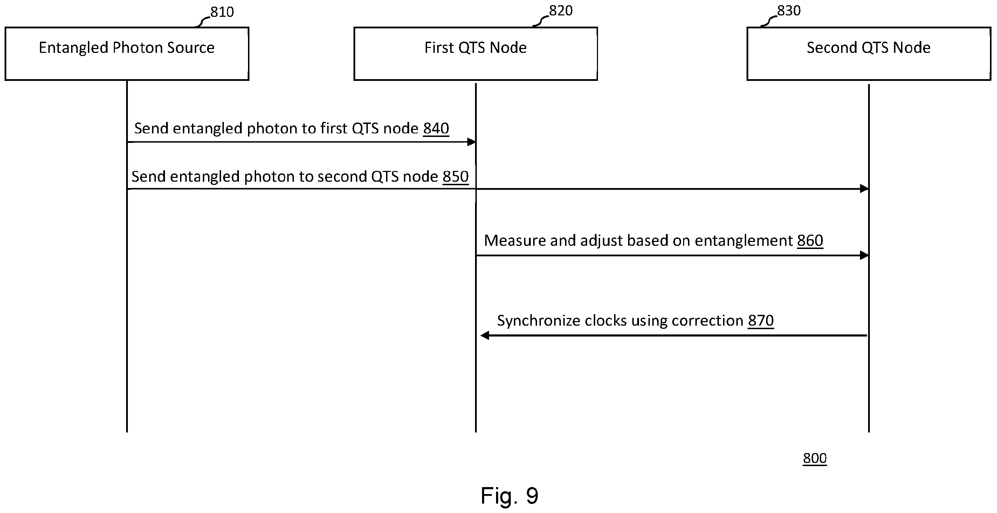

Fig. 9 depicts a sequence diagram of a method 800 according to the present disclosure. An entangled photon source 810 sends, 840, to a first QTS node 820, and entangled photon.

Moreover, the entangled photon source 810 sends, 850, an entangled photon a second QTS node 830. The first QTS node 820 measures the entangled photon and transmits corresponding data to the second QTS node 830, such that a local clock of the second QTS node 830 is adjusted based on the entanglement. The second QTS may carry out the same to the first QTS node 820 (not depicted). The clocks are synchronized, 870, using the correction determined at 860.

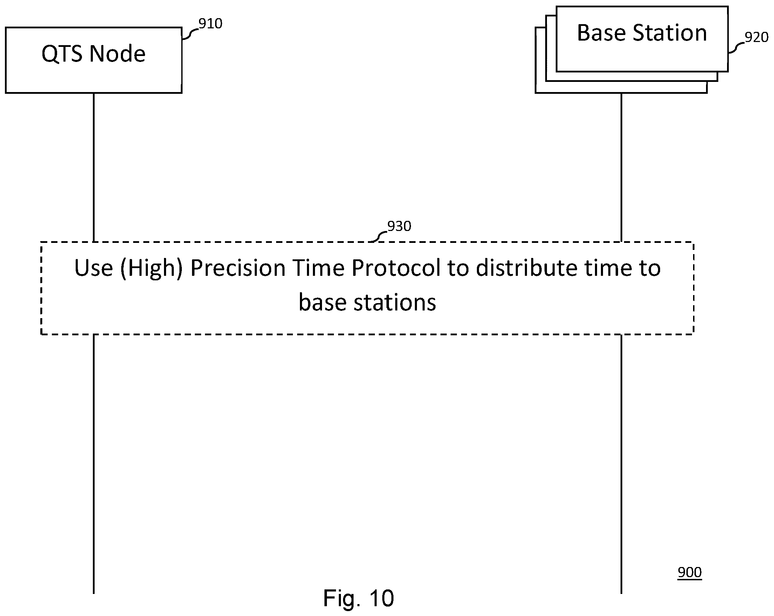

Fig. 10 depicts a sequence diagram of a method 900 according to the present disclosure. At least one QTS node 910 communicates with at least one base station 920. The method comprises using, 930 a (high) precision time protocol to distribute a time (or timestamp; or clock signal) to the at least one base station. The time protocol may include or be based on at least one of PTP, White Rabbit, and the like.

11

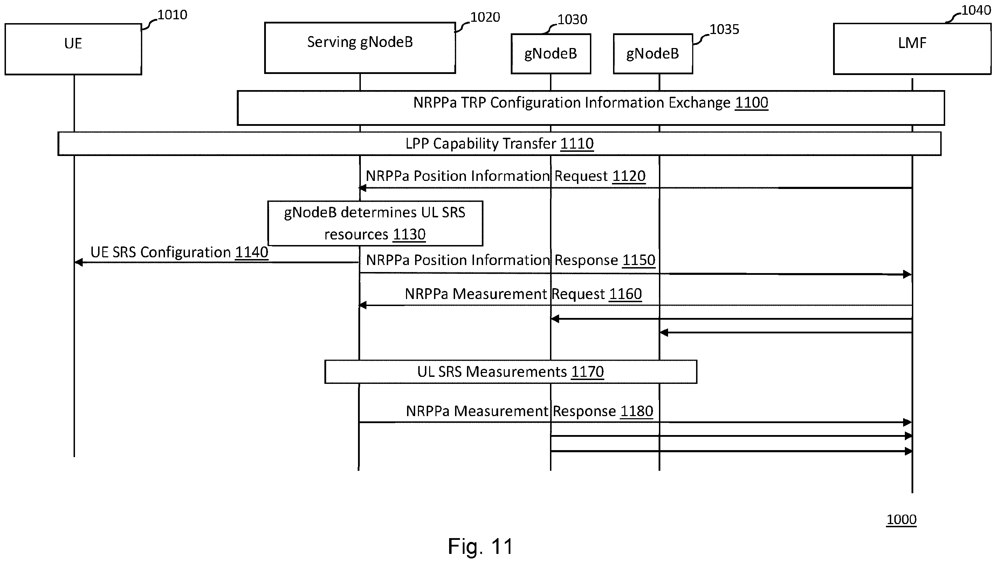

Fig. 11 depicts a sequence diagram of a method 1000 according to the present disclosure for UL-TDOA. The method 1000 may be applied according to a 3GPP standard, such as TS 138.305. The method 1000 is carried out by a UE 1010, a serving gNodeB 1020, two neighboring gNodeBs 1030 and 1035, and an LMF 1040.

Between the gNodeBs 1020, 1030, 1035, and the LMF an NRPPa (new radio physical layer protocol architecture) TRP (total radiated power) configuration information exchange 1100 is carried out. Moreover, between all participants 1010, 1020, 1030, 1035, and 1040, an LPP (LTE (long term evolution) positioning protocol) capability transfer 1110 is carried out.

When the information is exchanged, the LMF 1040 sends an NRPPa position information request 1120 to the serving gNodeB 1020. In response to that, the serving gNodeB 1020 determines UL SRS resources 1130 and sends a UE SRS configuration 1140 to the UE. Moreover, the serving gNodeB 1020 transmits an NRPPA positiong information response 1150 to the LMF 1040.

The LMF 1040 sends an NRPPa measurement request 1160 to the serving gNodeB and to the neighboring gNodeBs 1030 and 1035, which, in response, carry out UL SRS measurements 1170. Based on the measurements 1170 the gNodeBs 1020, 1030, and 1035 transmit their NRPPa measurement response 1180 to the LMF 1040, such that the LMF 1040 can carry out a trilateration algorithm to determine the position of the UE. For carrying out the UL SRS measurements 1170, the respective gNodeBs 1020, 1030, and 1035 use respective clock signals according to the present disclosure, such that a minimal synchronization error is achieved and thus, a minimal localization/positioning error is present.

The aspects and features described in relation to a particular one of the previous examples may also be combined with one or more of the further examples to replace an identical or similar feature of that further example or to additionally introduce the features into the further example.

In the following, some examples of the proposed technique are presented:

A first example relates to a clock provision system. The clock provision system comprises an interface for coupling to a cellular network a plurality of locally distributed nodes configured to measure reception times of entangled particles using local clocks of the plurality of distributed nodes. The clock provision system is configured to. The clock provision system is further configured to determine a time correlation of the entangled particles based on the measured reception times. The clock provision system is further configured to synchronize the local clocks of the plurality of nodes based on the determined time correlation. The clock provision system is further configured to control the interface to output at least one clock signal to the cellular network, the at least one clock signal being generated using at least one of the synchronized local clocks.

A second example relates to the first example. In the second example, the clock provision system is further configured to control interface circuitry of the interface at a respective node of the plurality of locally distributed nodes to output the clock signal to a network component of the cellular network that is nearest to the respective node. In this example, the clock signal is generated by the respective node using its synchronized local clock.

A third example relates to the first or the second example. In the third example, the plurality of locally distributed nodes is three locally distributed nodes. A first pair of nodes of the three nodes measures reception times of a first entangled particle pair, a second pair of nodes of the three nodes measures reception times of a second entangled particle pair, and a third pair of nodes of the three nodes measures reception times of a third entangled particle pair. In the third example, the clock provision system is further configured to determine a first time correlation of the first entangled particle pair, a second time correlation of the second entangled particle pair, and a third time correlation of the third entangled particle pair. The clock provision system is further configured to synchronize the local clocks of the three nodes based on the first, second, and third time correlation.

A fourth example relates to any one of the first example to the third example. In the fourth example, the clock provision system is further configured to control the interface to output respective clock signals to at least two base stations of the cellular network, the respective clock signals being generated using at least one of the synchronized local clocks.

A fifth example relates to the fourth example. In the fifth example a synchronization error resulting from the respective clock signals for the respective cellular networks is less than 100 picoseconds.

A sixth example relates to any one of the first example to the fifth example. In the sixth example the interface is further configured to receive a clock signal request from a network component of the cellular network. The clock provision system is further configured to control the interface to output the at least one clock signal to the network component in response to the clock signal request.

A seventh example relates to any one of the first example to the sixth example. In the seventh example, the clock provision system is further configured to control the interface to output the at least one clock signal according to a predetermined scheme.

An eighth example relates to any one of the first example to the seventh example. In the eighth example, the plurality of locally distributed nodes is further configured to measure a particle characteristic of the entangled particles. The clock provision system is further configured to determine the time correlation of the entangled particles based on the measured reception times and based on the measured particle characteristic.

A ninth example relates to any one of the first example to the eighth example In the ninth example, the entangled particles are entangled photons.

A tenth example relates to a system comprising a clock provision system according to any one of the first example to the ninth example. The system further comprises a network component of the cellular network coupled to the interface and configured to receive a clock signal from the clock provision system and use the clock signal to provide a network function.

An eleventh example relates to the tenth example. In the eleventh example, the network component is a base station. The base station is configured to use the clock signal to determine an arrival time of an uplink signal of a User Equipment, UE, at the base station. The base station is further configured to provide the determined arrival time to a function of the cellular network for determining a position of the UE.

A twelfth example relates to the eleventh example. In the twelfth example, the system comprises at least two further base station, wherein each of the at least two further base stations is configured to receive a respective clock signal from the clock provision system. Each base station is further configured to use the respective clock signal to determine an arrival time of the uplink signal at the respective base station. Each base station is further configured to provide the determined arrival time to the function of the cellular network for determining the position of the UE.

A thirteenth example relates to the twelfth example. In the thirteenth example, the network function is configured to determine the position of the UE based on time differences between the determined arrival times.

A fourteenth example relates to any one of the eleventh to thirteenth example. In the fourteenth example, the uplink signal is a sounding reference signal.

A fifteenth example relates to any one of the twelfth to fourteenth example. In the fifteenth example, a synchronization error resulting from the respective clock signals for the base stations is less than 100 picoseconds.

A sixteenth example relates to any one of the tenth example to the fifteenth example. In the sixteenth example, the network component is a base station and further configured to use the clock signal for hosting a network slice of the cellular network.

A seventeenth example relates to any one of the tenth example to the sixteenth example. In the seventeenth example, the network component is a base station and further configured to use the clock signal for handover of a user equipment, UE, to another base station.

An eighteenth example relates to a use of a clock signal output by the clock provision system according to any one of the first example to the ninth example.

A nineteenth example relates to the eighteenth example. In the nineteenth example, the network function includes at least one of determining a time difference of arrival, providing network slicing, and providing a handover.

A twentieth example relates to a base station for a cellular network comprising a node for quantum time synchronization, QTS. The node for QTS is configured to exchange, with one or more further nodes for QTS external to the base station, data indicating measured reception times of entangled particles measured at the node for QTS and at the one or more further nodes for QTS. The node for QTS is further configured to adjust a local clock of the node for QTS based on the measured reception times for synchronizing the local clock of the node for QTS with local clocks of the one or more further nodes for QTS. The base station is configured to use a clock signal of the synchronized local clock of the node for QTS for providing a network function.

A twenty-first example relates to the twentieth example. In the twenty-first example, the network function is determining a position of a user equipment, UE. The base station is further configured to use the clock signal to determine an arrival time of an uplink signal of the UE at the base station. The base station is further configured to provide the determined arrival time to a function of the cellular network for determining the position of the UE.

A twenty-second example relates to the twenty-first example. In the twenty-second example, the uplink signal is a sounding reference signal.

A twenty-third example relates to any one of the twentieth example to the twenty-second example. In the twenty-third example, the network function is network slicing and the base station is further configured to use the clock signal for hosting a network slice of the cellular network.

A twenty-fourth example relates to any one of the twentieth example to the twenty-third example. In the twenty-fourth example, the network function is a handover to a further base station. The base station is further configured to use the clock signal for the handover of a user equipment, UE, to the further base station.

A twenty-fifth example relates to any one of the twentieth example to the twenty-fourth example. In the twenty-fifth example, the node for QTS is further configured to measure the reception time of at least one of the entangled particles.

A twenty-sixth example relates to any one of the twentieth example to the twenty-fifth example. In the twenty-sixth example, the node for QTS is further configured to measure a particle characteristic of at least one of the entangled particles.

A twenty-seventh example relates to any one of the twentieth example to twenty-sixth example. In the twenty-seventh example, the node for QTS is further configured to exchange, with the one or more further nodes, data indicating measured particle characteristics of the entangled particles. The node for QTS is further configured to adjust the local clock of the node for QTS based on the measured reception times and the measured particle characteristics.

A twenty-eighth example relates to a cellular network comprising at least one base station according to any one of the twentieth example to the twenty-seventh example.

A twenty-ninth example relates to the twenty-eighth example. In the twenty-ninth example, the cellular network comprises three base stations according to the twenty-first example. The function of the cellular network is configured to determine the position of the UE based on time differences between the measured arrival times.

A thirtieth example relates to the twenty-eighth example. In the thirtieth example, the cellular network comprises two base stations according to the twenty-fourth example. The two base stations are configured to use the clock signals of their synchronized local clocks for handover of the UE from one base station of the two base stations to the other.

A thirty-first example relates to a method for determining a position of a user equipment, UE. The method comprises providing a plurality of base stations with a respective quantum time synchronized clock signal. The method further comprises determining, using the respective quantum time synchronized clock signal, arrival times of an uplink signal of the UE at the plurality of base stations. The method further comprises determining the position of the UE based on time differences between the arrival times of the uplink signal.

A thirty-second example relates to the thirty-first example. In the thirty-second example, a synchronization error resulting from the quantum synchronized clock signals for the base stations is less than 100 picoseconds.

A thirty-third example relates to the thirty-second example. In the thirty-third example, the determination of the position has an error of less than 100 millimeters.

A thirty-fourth example relates to any one of the thirty-first example to the thirty-third example. In the thirty-fourth example, the plurality of base stations is three base station. The position of the UE is determined based on a trilateration.

A thirty-fifth example relates to any one of the thirty-first example to the thirty-fourth example. In the thirty-fifth example, the uplink signal is a sounding reference signal.

A thirty-sixth example relates to a method for determining a clock signal for a cellular network. The method comprises measuring reception times of entangled particles using local clocks of a plurality of distributed nodes. The method further comprises determining a time correlation of the entangled particles based on the measured reception times. The method further comprises synchronizing the local clocks of the plurality of nodes based on the determined time correlation. The method further comprises outputting a clock signal to the cellular network, the clock signal being generated using at least one of the synchronized local clocks.

A thirty-seventh example relates to the thirty-sixth example. In the thirty-seventh example, the method further comprises using, by a network component of the cellular network, the clock signal to provide a network function.

A thirty-eighth example relates to a method for a base station. The base station comprises a node for quantum time synchronization, QTS. The method comprises exchanging, with one or more further nodes for QTS external to the base station, data indicating measured reception times of entangled particles measured at the node for QTS and at the one or more further nodes for QTS. The method further comprises adjusting a local clock of the node for QTS based on the measured reception times for synchronizing the local clock of the node for QTS with local clocks of the one or more further nodes for QTS. The method further comprises using a clock signal of the synchronized local clock of the node for QTS for providing a network function.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F) PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A clock provision system, the system comprising:

   an interface for coupling to a cellular network; and
   a plurality of locally distributed nodes configured to measure reception times of entangled particles using local clocks of the plurality of distributed nodes,
   wherein the clock provision system is configured to:

   determine a time correlation of the entangled particles based on the measured reception times;
   synchronize the local clocks of the plurality of nodes based on the determined time correlation; and
   control the interface to output at least one clock signal to the cellular network, the at least one clock signal being generated using at least one of the synchronized local clocks.

2. The clock provision system of claim 1, wherein the system is configured to control interface circuitry of the interface at a respective node of the plurality of locally distributed nodes to output the clock signal to a network component of the cellular network that is nearest to the respective node, wherein the clock signal is generated by the respective node using its synchronized local clock.

3. The clock provision system of any one of claims 1 to 2, wherein the plurality of locally distributed nodes is three locally distributed nodes, wherein

   a first pair of nodes of the three nodes measures reception times of a first entangled particle pair,
   a second pair of nodes of the three nodes measures reception times of a second entangled particle pair, and
   a third pair of nodes of the three nodes measures reception times of a third entangled particle pair,
   wherein the system is further configured to:

   determine a first time correlation of the first entangled particle pair, a second time correlation of the second entangled particle pair, and a third time correlation of the third entangled particle pair; and
   synchronize the local clocks of the three nodes based on the first, second, and third time correlation.

4. The clock provision system of any one of claims 1 to 3, wherein the plurality of locally distributed nodes is further configured to measure a particle characteristic of the entangled particles, and wherein the system is further configured to determine the time correlation of the entangled particles based on the measured reception times and based on the measured particle characteristic.

5. A system comprising:

   a clock provision system according to any one of claims 1 to 4;
   a network component of the cellular network coupled to the interface and configured to:

   receive a clock signal from the clock provision system; and
   use the clock signal to provide a network function.

6. The system of claim 5, wherein the network component is a base station, and wherein the base station is configured to:

   use the clock signal to determine an arrival time of an uplink signal of a User Equipment, UE, at the base station; and

provide the determined arrival time to a function of the cellular network for determining a position of the UE.

7. The system of claim 6, wherein the system comprises at least two further base station, wherein each of the at least two further base stations is configured to:

receive a respective clock signal from the clock provision system;
use the respective clock signal to determine an arrival time of the uplink signal at the respective base station; and
provide the determined arrival time to the function of the cellular network for determining the position of the UE.

8. The system of claim 7, wherein the network function is configured to determine the position of the UE based on time differences between the determined arrival times.

9. The system of any one of claims 5 to 8, wherein the network component is a base station and further configured to use the clock signal for hosting a network slice of the cellular network.

10. The system of any one of claims 5 to 9, wherein the network component is a base station and further configured to use the clock signal for handover of a user equipment, UE, to another base station.

11. A base station for a cellular network comprising:
a node for quantum time synchronization, QTS, configured to:

exchange, with one or more further nodes for QTS external to the base station, data indicating measured reception times of entangled particles measured at the node for QTS and at the one or more further nodes for QTS; and
adjust a local clock of the node for QTS based on the measured reception times for synchronizing the local clock of the node for QTS with local clocks of the one or more further nodes for QTS,
wherein the base station is configured to use a clock signal of the synchronized local clock of the node for QTS for providing a network function.

12. A cellular network comprising at least one base station according to claim 11.

13. A method for determining a position of a user equipment, UE, the method comprising:

providing a plurality of base stations with a respective quantum time synchronized clock signal;
determining, using the respective quantum time synchronized clock signal, arrival times of an uplink signal of the UE at the plurality of base stations; and
determining the position of the UE based on time differences between the arrival times of the uplink signal.

14. A method for determining a clock signal for a cellular network, the method comprising:

measuring reception times of entangled particles using local clocks of a plurality of distributed nodes;
determining a time correlation of the entangled particles based on the measured reception times;
synchronizing the local clocks of the plurality of nodes based on the determined time correlation; and
outputting a clock signal to the cellular network, the clock signal being generated using at least one of the synchronized local clocks.

15. A method for a base station, the base station comprising a node for quantum time synchronization, QTS, the method comprising:

exchanging, with one or more further nodes for QTS external to the base station, data indicating measured reception times of entangled particles measured at the node for QTS and at the one or more further nodes for QTS; and
adjusting a local clock of the node for QTS based on the measured reception times for synchronizing the local clock of the node for QTS with local clocks of the one or more further nodes for QTS; and
using a clock signal of the synchronized local clock of the node for QTS for providing a network function.

**Amended claims in accordance with Rule 137(2) EPC.**

1. A clock provision system (100), the system (100) comprising:

an interface (110) for coupling to a cellular network; and
a plurality of locally distributed nodes (120, 130, 140) configured to measure reception times of entangled particles using local clocks (121, 131, 141) of the plurality of distributed nodes (120, 130, 140), wherein the plurality of locally distributed nodes (120, 130, 140) is three locally distributed nodes, wherein
a first pair of nodes of the three nodes (120, 130, 140) is configured to measure reception times of a first entangled particle pair,
a second pair of nodes of the three nodes (120, 130, 140) is configured to measure reception times of a second entangled particle pair, and
a third pair of nodes of the three nodes (120, 130, 140) is configured to measure reception times of a third entangled particle pair,
wherein the clock provision system (100) is configured to:

determine a first time correlation of the first entangled particle pair, a second time correlation of the second entangled particle pair, and a third time correlation of the third entangled particle pair;
synchronize the local clocks (121, 131, 141) of the three nodes based on the first, second, and third time correlation; and
control the interface (110) to output at least one clock signal to the cellular network, the at least one clock signal being generated using at least one of the synchronized local clocks (121, 131, 141).

2. The clock provision system (100) of claim 1, wherein the clock provision system (100) is configured to control interface circuitry of the interface (110) at a respective node of the plurality of locally distributed nodes (120, 130, 140) to output the clock signal to a network component of the cellular network that is nearest to the respective node (120, 130, 140), wherein the clock signal is generated by the respective node using its synchronized local clock (121, 131, 141).

3. The clock provision system (100) of claim 1 or claim 2, wherein the plurality of locally distributed nodes (120, 130, 140) is further configured to measure a particle characteristic of the entangled particles, and wherein the clock provision system (100) is further configured to determine the time correlation of the entangled particles based on the measured reception times and based on the measured particle characteristic.

4. A system (200) comprising:

a clock provision system (100) according to any one of claims 1 to 3;
a network component (211) of the cellular network (210) coupled to the interface (110) and configured to:

receive a clock signal from the clock provision system (100); and
use the clock signal to provide a network function.

5. The system of claim 4, wherein the network component (211) is a base station, and wherein the base station is configured to:

use the clock signal to determine an arrival time of an uplink signal of a User Equipment, UE, at the base station; and
provide the determined arrival time to a function of the cellular network for determining a position of the UE.

6. The system of claim 5, wherein the system comprises at least two further base station (220, 230), wherein each of the at least two further base stations (220, 230) is configured to:

receive a respective clock signal from the clock provision system (100);
use the respective clock signal to determine an arrival time of the uplink signal at the respective base station; and
provide the determined arrival time to the function of the cellular network for determining the position of the UE.

7. The system of claim 6, wherein the network function is configured to determine the position of the UE based on time differences between the determined arrival times.

8. The system of any one of claims 4 to 7, wherein the network component (211) is a base station and further configured to use the clock signal for hosting a network slice of the cellular network.

9. The system of any one of claims 4 to 8, wherein the network component (211) is a base station and further configured to use the clock signal for handover of a user equipment, UE, to another base station.

10. A method (600) for determining a clock signal for a cellular network, the method comprising:

Measuring (610) reception times of entangled particles using local clocks of a plurality of distributed nodes, wherein the plurality of locally distributed nodes is three locally distributed nodes, and wherein measuring the reception times of the entangled particles comprises:

measuring reception times of a first entangled particle pair at a first pair of nodes of the three nodes;
measuring reception times of a second entangled particle pair at a second pair of nodes of the three nodes; and
measuring reception times of a third entangled particle pair at a third pair of nodes of the three nodes;

determining (610) a first time correlation of the first entangled particle pair, a second time correlation of the second entangled particle pair, and a third time correlation of the third entangled particle pair;
synchronizing (620) the local clocks of the three nodes based on the first, second, and third time correlation; and
outputting (630) a clock signal to the cellular network, the clock signal being generated using at least one of the synchronized local clocks.

11. A method comprising:

determining a clock signal for a cellular network according to the method of claim 10;
receiving the clock signal at a network component of the cellular network; and
using the clock signal at the network component to provide a network function.

12. The method of claim 11, wherein the network component is a base station, and wherein using the clock signal at the network component to provide the network function comprises:

using the clock signal to determine an arrival time of an uplink signal of a User Equipment, UE, at the base station; and
providing the determined arrival time to a function of the cellular network for determining a position of the UE.

13. The method of claim 12, wherein the method further comprises:

receiving a respective clock signal determined according to the method of claim 10 at at least two further base stations;
using the respective clock signal by each of the at least two further base stations to determine an arrival time of the uplink signal at the respective base station; and
providing, by each of the at least two further base stations, the determined arrival time to the function of the cellular network for determining the position of the UE.

14. The method of claim 13, wherein the network function is configured to determine the position of the UE based on time differences between the determined arrival times.

15. The method of any one of claims 11 to 14, wherein the network component is a base station, and wherein using the clock signal at the network component to provide the network function comprises using the clock signal for hosting a network slice of the cellular network.

110

141
140

120

121

Clock Sync.
Protocol

130

131

100

Fig. 1

Fig. 2

Fig. 3

300

Fig. 4

EP 4 718 751 A1

Fig. 5

Providing a plurality of
base stations with a
respective QTS clock signal    510

Determining arrival times
of an uplink signal at the
plurality of base stations    520

Determining the position
of the UE based on time
differences between the
arrival times    530

500

# Fig. 6

Measuring reception times
of entangled particles
using local clocks    610

Determining a time
correlation of the
entangled particles    620

Synchronizing the local
clocks    630

Outputting a clock signal
to cellular network    640

600

# Fig. 7

Exchanging data indicating measured reception times of entangled particles — 710

Adjusting a local clock — 720

Using a clock signal for providing a network function — 730

700

# Fig. 8

| Entangled Photon Source | First QTS Node | Second QTS Node |
|---|---|---|

Send entangled photon to first QTS node 840

Send entangled photon to second QTS node 850

Measure and adjust based on entanglement 860

Synchronize clocks using correction 870

800

Fig. 9

EP 4 718 751 A1

EP 4 718 751 A1

QTS Node  910

Base Station  920

930

Use (High) Precision Time Protocol to distribute time to base stations

900

Fig. 10

| UE 1010 | Serving gNodeB 1020 | gNodeB 1030 | gNodeB 1035 | LMF 1040 |
|---|---|---|---|---|

NRPPa TRP Configuration Information Exchange 1100

LPP Capability Transfer 1110

NRPPa Position Information Request 1120

gNodeB determines UL SRS resources 1130

UE SRS Configuration 1140 | NRPPa Position Information Response 1150

NRPPa Measurement Request 1160

UL SRS Measurements 1170

NRPPa Measurement Response 1180

1000

Fig. 11

## EUROPEAN SEARCH REPORT

**Application Number**

EP 24 20 3519

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/166617 A1 (LAMAS-LINARES ANTIA [US] ET AL) 26 May 2022 (2022-05-26) <br> * paragraph [0002] * <br> * paragraph [0004] - paragraph [0013] * <br> * paragraph [0024] - paragraph [0029] * <br> * paragraph [0033] - paragraph [0034] * <br> * paragraph [0037] * <br> * paragraph [0041] - paragraph [0042] * <br> * paragraph [0052] * <br> * paragraph [0067] - paragraph [0072] * <br> * figures 1-5 * <br> * paragraph [0078] - paragraph [0080] * <br> ----- | 1-15 | INV. <br> H04J3/06 |
| X | US 2005/199812 A1 (SHIH YANHUA [US]) 15 September 2005 (2005-09-15) <br> * paragraph [0004] * <br> * paragraph [0009] - paragraph [0015] * <br> * paragraph [0030] - paragraph [0040] * <br> ----- | 1-15 | |
| X | EDITORS: "D1.2 Technical Report on QIT4N use case part 1: Network aspects of Quantum Information Technology ? for approval;QIT4N-I-276", ITU-T DRAFT; STUDY PERIOD 2021-2024; FOCUS GROUP QIT4N; SERIES QIT4N-I-276, INTERNATIONAL TELECOMMUNICATION UNION, GENEVA ; CH <br> , <br> vol. qit4n <br> 27 October 2021 (2021-10-27), pages 1-61, XP044326323, Retrieved from the Internet: URL:https://extranet.itu.int/sites/itu-t/f ocusgroups/qit4n/input/QIT4N-I-276.docx [retrieved on 2021-10-27] <br> * sections 6 to 6.1.3.5 * <br> ----- | 1-15 | **TECHNICAL FIELDS SEARCHED (IPC)** <br><br> H04J |

The present search report has been drawn up for all claims

| Place of search | Date of completion of the search | Examiner |
|---|---|---|
| The Hague | 20 February 2025 | Roldán Andrade, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                          
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 3519

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2025

| Patent document cited in search report | Publication date | Patent family member(s) | Publication date |
|---|---|---|---|
| US 2022166617 A1 | 26-05-2022 | US 2020084033 A1<br>US 2022166617 A1 | 12-03-2020<br>26-05-2022 |
| US 2005199812 A1 | 15-09-2005 | NONE | |

EPO FORM P0459

For more details about this annex : see Official Journal of the European Patent Office, No. 12/82